Europäisches Patentamt

European Patent Office

Office européen des brevets

(19)

(11) Veröffentlichungsnummer: **0 139 151**
**B1**

# (12) EUROPÄISCHE PATENTSCHRIFT

(45) Veröffentlichungstag der Patentschrift:
05.10.88

(51) Int. Cl.⁴: **B 66 D 1/34**, B 60 S 5/00

(21) Anmeldenummer: **84109874.2**

(22) Anmeldetag: **18.08.84**

(54) **Seiltrommel.**

(30) Priorität: 24.08.83 DE 8324289 U

(43) Veröffentlichungstag der Anmeldung:
02.05.85 Patentblatt 85/18

(45) Bekanntmachung des Hinweises auf die Patenterteilung:
05.10.88 Patentblatt 88/40

(84) Benannte Vertragsstaaten:
AT DE FR GB IT NL SE

(56) Entgegenhaltungen:
DE - B - 1 184 478
US - A - 1 461 052
US - A - 2 892 598

(73) Patentinhaber: M A N Nutzfahrzeuge GmbH, Dachauer Strasse 667 Postfach 50 06 20, D-8000 München 50 (DE)

(72) Erfinder: Hannak, Kurt, Schmaedelstrasse 32, D-8000 München 60 (DE)
Erfinder: Knetsch, Holger, Ludwig-Ernst-Strasse 44, D-8060 Dachau (DE)

EP 0 139 151 B1

## Beschreibung

Die Erfindung betrifft eine Seiltrommel für die Reserveradwinde eines Nutzfahrzeuges, etwa eines Lkw's oder eines Omnibusses.

Eine solche Seilwinde bildet ein nur selten benutztes Nebenaggregat und wird deshalb aus Kostengründen auch nur für verhältnismässig wenige Benutzungsfälle ausgelegt. Als Seiltrommel verwendet man daher einen Rohrstutzen, an welchem das Ende des Seiles angenietet oder durch eine Bohrung durchgeführt und verkeilt ist. Eine solche Befestigung führt allerdings zu einer Quetschung oder Abknickung des Seiles, das an der betreffenden Stelle dann auch bereits nach verhältnismässig wenig Benutzungsfällen reissen kann.

Ausserdem ist es erforderlich, um die Belastung an der Befestigungsstelle des Seiles auf ein Mindestmass zu reduzieren, die Seiltrommel so auszulegen, dass nach Abwickeln der vollen Nutzlänge des Seiles noch ein längeres Seilende auf der Trommel aufgewickelt bleibt. Dies vergrössert aber die Baugrösse der Seiltrommel.

Nach der US-A-2 892 598 ist eine Seiltrommel mit einer im Aussenflansch angebrachten Seilendenhalterung bekannt. Die Halterung ist aufwendig in der Herstellung, wie auch das Einfädeln des Seilendes in die Halterung umständlich ist.

Ausgehend von diesem Stand der Technik liegt der Erfindung die Aufgabe zugrunde, eine billig und einfach zu montierende und herzustellende Seiltrommel zu schaffen, welche dennoch eine solche Befestigung eines Seiles zulässt, dass dieses Seil an der Befestigungsstelle selbst dann nicht überlastet wird, wenn es ganz abgewickelt werden sollte.

Diese Aufgabe wird erfindungsgemäss durch die Merkmale des Anspruchs 1 gelöst. Hierbei ist die Seiltrommel aus Kunststoff geformt, und zwar mindestens an ihrem Aussenumfang, bevorzugt jedoch ganz, wobei die Halterung zur Befestigung des Seiles aus zwei am einen Ende der Seiltrommel nebeneinanderliegend angeformten Vorsprüngen gebildet ist, die zwischeneinander eine tangentiale Aufnahme für das Seil bilden. Es ist lediglich am Seilende eine Verdickung anzubringen, etwa in Form einer aufgeklemmten oder aufgelöteten Muffe, deren Breite grösser ist als der Abstand zwischen den beiden Vorsprüngen. Das Seil muss dann lediglich zwischen die Vorsprünge eingelegt werden und läuft somit tangential auf den Umfang der Seiltrommel auf. Das Seil wird somit nicht mehr geknickt oder gequetscht, so dass es bis ganz zum Ende abgewickelt werden kann.

Die erfindungsgemässe Seiltrommel ermöglicht somit nicht nur die Nutzung der vollen Seillänge, sondern bedarf zur Herstellung auch keines gesonderten Arbeitsganges, da während der Formgebung der Kunststoff-Seiltrommel im gleichen Arbeitsgang auch die Vorsprünge mit angeformt werden. Schliesslich ist auch der Zusammenbau der Seilwinde stark vereinfacht, da bei der erfindungsgemässen Seiltrommel das Seil einfach nur zwischen die Vorsprünge eingelegt und dort allenfalls noch durch eine einfache Massnahme am Herausrutschen gehindert zu werden braucht.

Es ist besonders von Vorteil, die beiden Vorsprünge derart anzuordnen, dass die zwischen ihnen gebildete Aufnahme nicht nur tangential verläuft, sondern auch in Achsrichtung der Seiltrommel leicht geneigt ist, um eine völlig knickfreie Ableitung des Seiles zu gestatten. Gemäss einer Ausgestaltung der Erfindung ist es aber von Vorteil, dass die beiden Vosprünge ganz allgemein etwa in Achsrichtung nebeneinanderliegen, wobei auch eine leichte Neigung der zwischen ihnen gebildeten Aufnahme zur Umfangsrichtung mit umfasst sein soll. Der innenliegende der beiden Vorsprünge ist erfindungsgemäss als Umfangsflansch ausgebildet, der den zum Aufwickeln des Seiles ausgebildeten Abschnitt der Seiltrommel zur Halterung hin begrenzt. In diesem Umfangsflansch ist nahe der Aufnahme eine Lücke ausgebildet, die zum Durchführen des Seiles geeignet ist. Es wird somit verhindert, dass beim Aufwickeln des Seiles dieses unmittelbar an der Aufnahme über das dort eingelegte Teil wegläuft und es etwa seitlich gegen einen der Vorsprünge andrückt, was sonst zu einer Knickstelle führen könnte.

Die Aufnahme ist gemäss einer weiteren Ausgestaltung der Erfindung von einem Schlitz gebildet, dessen Breite jener des Seiles entspricht und dessen Boden entsprechend dem Radius des Seiles ausgerundet ist. Am einen Ende des Schlitzes ist dieser zum einem teilzylindrischen Sitz aufgeweitet, der so ausgestaltet ist, dass er einen zylindrischen, am Seilende befestigten Nippel passend und bevorzugt mit leichtem Presssitz aufnehmen kann.

Gemäss einer weiteren Ausgestaltung der Erfindung ist quer zum Verlauf des Seiles ein die beiden Vorsprünge durchdringender Stift angeordnet, und zwar mit einem Abstand zum Boden des Schlitzes, der grösser ist als der Durchmesser des Seiles, aber kleiner als der Abstand der Aussenkontur des genannten zylindrischen Nippels vom Boden des Schlitzes. Dieser Stift befindet sich kurz hinter dem Nippel und stellt eine zusätzliche Sicherung dar, um das Durchrutschen des Seiles zu verhindern.

Es ist dem Grunde nach möglich, den Stift bereits beim Formungsvorgang der Kunststoff-Seiltrommel mit einzuformen, es ist aber gemäss einer Ausgestaltung der Erfindung von Vorteil, diesen Stift als Kerbstift auszubilden und in entsprechende Querbohrungen in den Vorsprüngen einzuschlagen, da es bei dieser Ausgestaltung möglich ist, ein bereits fertig hergestelltes, mit Endkausche am einen Ende und Endnippel am anderen Ende versehenes Seil zu verwenden, in den Schlitz bzw. den Sitz einzulegen und anschliessend den Kerbstift einzuschlagen oder einzudrücken.

Die Erfindung bezieht sich nicht nur auf die beschriebene Seiltrommel, sondern auch auf die aus Seiltrommel und Seil gebildete Anordnung

sowie auf eine die genannte Anordnung enthaltende Seilwinde.

Der Gegenstand der Erfindung ist anhand der beigefügten, schematischen Zeichnung noch näher erläutert. In dieser zeigt:

Fig. 1 eine Reserveradwinde in teilweise geschnittener Seitenansicht, und

Fig. 2 den Schnitt längs II–II durch die Seiltrommel der Reserveradwinde der Fig. 1.

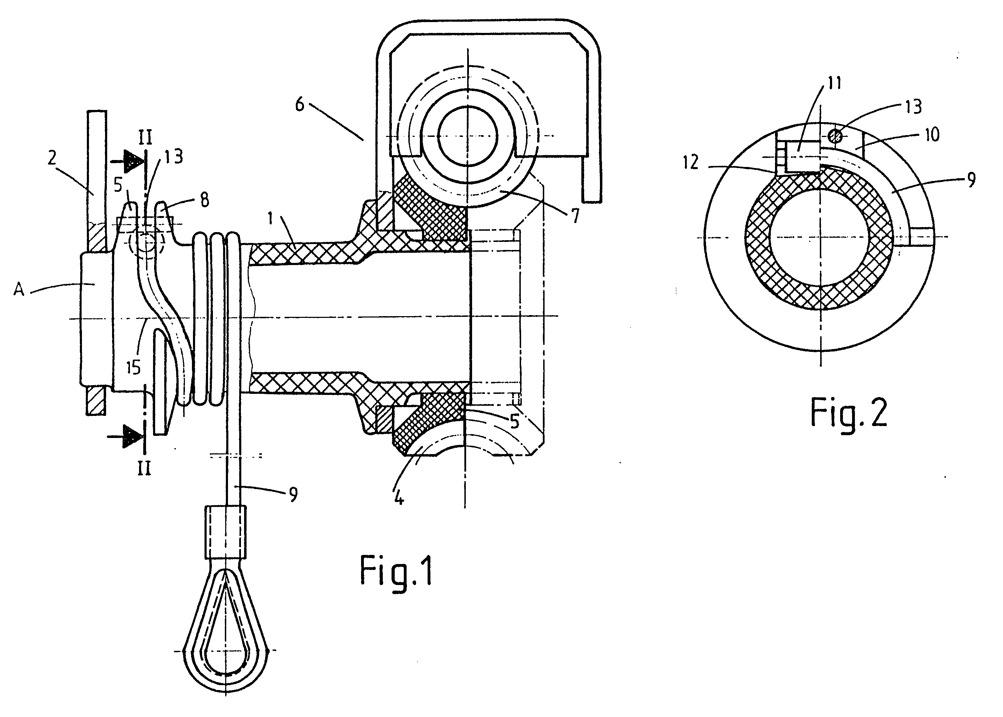

In Fig. 1 ist eine Reserveradwinde gezeigt, die eine Kunststoff-Seiltrommel aufweist. Deren eines Ende A ist in einem Lagerblech 2 drehbar derart abgestützt, dass ihre Axialbewegung in Richtung zum Lagerblech 2 verhindert ist.

Vor dem anderen Ende der Seiltrommel 1 ist ein Ringbund angeordnet, der sich auf der Stirnwand eines Getriebegehäuses 6 abstützt. In diesem ist eine Schnecke 7 gelagert, die mit einem Halbschneckenrad 4 kämmt, das am benachbarten Ende der Seiltrommel 1 befestigt ist.

Die Seiltrommel 1 und die Schnecke 7 sind als Hohlteile ausgebildet und sind, wie auch das Halbschneckenrad 4, ganz aus Kunststoff geformt.

Die Seiltrommel 1 weist einen Bereich zum Aufwickeln eines Seiles 9 auf, der zum Getriebegehäuse 6 hin durch den genannten Ringbund und zum Lagerblech 3 hin durch einen Umfangsflansch 8 begrenzt wird, dessen Durchmesser etwa jenem des Ringbundes entspricht.

Zwischen dem Umfangsflansch 8 und dem Lagerblech 2 ist ein Vorsprung 5 am Aussenumfang der Seiltrommel 1 angeformt, dessen radiale Höhe jener des Umfangsflansches 8 entspricht.

Zwischen Vorsprung 5 und Umfangsflansch 8 ist ein Schlitz 10 ausgespart, dessen Breite dem Durchmesser des Seiles 9 entspricht oder geringfügig kleiner ist. Dieser Schlitz 10 ist an seinem radial innenliegenden Boden ausgerundet.

In Aufwickelrichtung des Seiles 9 an den Vorsprung 10 angrenzend, weist der Umfangsflansch 8 eine Lücke 15 auf, durch welche (in Fig. 1 ersichtlich) das Seil 9, das mit seinem Ende in den Schlitz 10 eingeklemmt ist, ohne unzulässige Biegung in den zum Aufwickeln des Seiles 9 bestimmten Bereich der Seiltrommel 1 herbeigeführt werden kann.

Der Schlitz 10 ist zu jenem Ende hin, das von der Lücke 15 abgewandt ist, zylindrisch ausgeweitet, wobei die Mittelachse dieses Zylinders mit dem Mittelpunkt des am Schlitz auflaufenden Seiles 9 zusammenfällt. Diese zylindrische Ausweitung bildet einen Sitz 12, der zur passenden Aufnahme eines Endnippels 11 eingerichtet ist, der am freien Ende des Seiles 9 befestigt ist.

An jenem Abschnitt des Schlitzes 10, der nicht den Sitz 12 aufweist, und diesem benachbart, sind der Vorsprung 5 und der Umfangsflansch 8 durchbohrt, wobei die Richtung der Bohrung parallel zur Mittelachse der Seiltrommel 1 verläuft. In dieser Bohrung ist ein Kerbstift 13 eingeschlagen, der mit den dem Schlitz 10 abgewandten Oberflächen des Vorsprunges 5 und des Umfangsflansches 8 abschliesst.

Wie aus Fig. 2 ersichtlich, ist die Lage des Stiftes 13 derart gewählt, dass dieser zwar nicht gegen das Seil 9 anliegt, aber in die Kontur des Nippels 11 hineinragt, so dass er das Ausziehen des Nippels 11 in Tangentialrichtung verhindert, auch wenn dieser durch einen besonders heftigen Druck den Kunststoff der Seiltrommel abtragen würde.

## Patentansprüche

1. Seiltrommel für die Reserveradwinde eines Nutzfahrzeuges, mit einer Halterung zur Befestigung eines Seiles, dadurch gekennzeichnet, dass die Seiltrommel (1) aus Kunststoff geformt ist und dass die Halterung aus zwei am einen Ende der Seiltrommel (1) nebeneinanderliegend angeformten Vorsprüngen (5, 8) geformt ist, zwischen denen eine tangentiale Aufnahme (Schlitz 10) ausgespart ist.

2. Seiltrommel nach Anspruch 1, dadurch gekennzeichnet, dass die beiden Vorsprünge (5, 8) etwa auf einer Achsparallelen nebeneinander liegen und dass der einwärtsgelegene Vorsprung als Umfangsflansch (8) ausgebildet ist, der nahe der Aufnahme (Schlitz 10) eine Lücke (15) aufweist.

3. Seiltrommel nach einem der Ansprüche 1 oder 2, dadurch gekennzeichnet, dass die Aufnahme von einem Schlitz (10) gebildet ist, der sich in Tangentialrichtung zur Seiltrommel (1) erstreckt und an seinem einen Ende zu einem teilzylindrischen Sitz (12) aufgeweitet ist.

4. Seiltrommel nach Anspruch 3, dadurch gekennzeichnet, dass quer zum Schlitz (10) ein die Vorsprünge (5, 8) durchdringender, den Endnippel (11) hintergreifender Stift (13) angeordnet ist.

5. Seiltrommel nach Anspruch 4, dadurch gekennzeichnet, dass der Stift ein in Bohrungen in den Vorsprüngen (5, 8) angeordneter Kerbstift (13) ist.

6. Seiltrommel nach Anspruch 4 oder 5, mit Seil, dadurch gekennzeichnet, dass der Durchmesser des Seiles (9) der Breite des Schlitzes (10) etwa entspricht, dass der Abstand des Stiftes (13) vom Boden des Schlitzes (10) grösser ist als der Durchmesser des Seiles (9) und dass am Ende des Seiles ein Endnippel (11) befestigt ist, der passend zum Sitz (12) ausgebildet und in diesem aufgenommen ist.

## Claims

1. A cable drum for the spare wheel winch of a commercial vehicle, comprising a mounting for securing a cable, characterised in that the cable drum (1) is formed from plastics material and the mounting is formed from two adjacent projections (5, 8) formed on one end of the cable drum (1), between which projections a tangential receiving space (slot 10) remains.

2. A cable drum according to claim 1, characterised in that the two projections (5, 8) are arranged adjacent one another approximately on parallel axes, and the inwardly-lying projection is formed as a circumferential flange (8) which has a gap (15) near the receiving space (slot 10).

3. A cable drum according to any one of claims 1 or 2, characterised in that the receiving space is formed by a slot (10) which extens tangentially relative to the cable drum (1) and which is enlarged at its end to form a partially cylindrical seat (12).

4. A cable drum according to claim 3, characterised in that a pin (13), which passes through the projections (5, 8) and engages behind the end nipple (11), is arranged transversely to the slot (10).

5. A cable drum according to claim 4, characterised in that the pin is a slotted pin (13) which is arranged in boreholes in the projections (5, 8).

6. A cable drum according to claim 4 or 5, having a cable, characterised in that the diameter of the cable (9) approximately corresponds to the width of the slot (10), the distance of the pin (13) from the base of the slot (10) is greater than the diameter of the cable (9), and an end nipple (11) is secured to the end of the cable, which end nipple is adapted to fit the seat (12) and is received therein.

**Revendications**

1. Tambour à câble pour le treuil de roue de secours d'un véhicule utilitaire, avec une partie d'attache pour la fixation d'un câble, caractérisé en ce que le tambour à câble (1) est en matière plastique moulée et en ce que la partie d'attache se compose de deux saillies moulées (5, 8) situées l'une à côté de l'autre à une extrémité du tambour à câble (1), et entre lesquelles est ménagé un logement tangentiel (fente 10).

2. Tambour à câble selon la revendication 1, caractérisé en ce que les deux saillies (5, 8) sont situées l'une à côté de l'autre en considérant notamment une parallèle à l'axe et en ce que la saillie intérieure est constituée sous forme de collerette périphérique (8) qui présente une cavité (15) à proximité du logement (fente 10).

3. Tambour à câble selon l'une des revendications 1 ou 2, caractérisé en ce que le logement consiste en une fente (10) s'étendant en direction tangentielle par rapport au tambour à câble (1) et s'élargissant à l'une de ses extrémités suivant un siège (12) en fome d'élément cylindrique.

4. Tambour à câble selon la revendication 3, caractérisé en ce qu'une goupille (13) traversant les saillies (5, 8) et s'engageant derrière le raccord d'extrémité (11) est disposée perpendiculairement à la fente (10).

5. Tambour à câble selon la revendication 4, caractérisé en ce que la goupille est une goupille cannelée (13) disposée dans des alésages des saillies (5, 8).

6. Tambour à câble selon la revendication 4 ou 5, avec câble, caractérisé en ce que le diamètre du câble (9) correspond sensiblement à la largeur de la fente (10), en ce que la distance de la goupille (13) au fond de la fente (10) est supérieure au diamètre du câble (9) et en ce qu'un raccord d'extrémité (11) est fixé à l'extrémité du câble, ce raccord étant constitué pour s'ajuster au siège (12) et étant logé dans celui-ci.

Fig.1

Fig.2

0 139 151